# EUROPÄISCHE PATENTSCHRIFT

(11) **EP 1 259 463 B1**
(45) Veröffentlichungstag und Bekanntmachung des Hinweises auf die Patenterteilung: **29.10.2003**
(21) Anmeldenummer: 01915300.6
(22) Anmeldetag: 28.02.2001
(51) Int. Cl.: C01F 7/14

(54) **VERFAHREN ZUR HERSTELLUNG EINES ALUMINIUMHYDROXIDGELS**
METHOD OF MAKING ALUMINIUM HYDROXIDE GEL
METHODE DE PRODUCTION DE GEL D'HYDROXYDE D'ALUMINIUM

(30) Priorität: 29.02.2000 DE 10009369
(43) Veröffentlichungstag der Anmeldung: 27.11.2002
(73) Patentinhaber: Hydro Aluminium Deutschland GmbH, 53117 Bonn (DE)
(72) Erfinder: KUDERMANN, Gerhard, 53347 Alfter (DE); SCHUBERT, Jürgen, 53501 Grafschaft (DE)
(74) Vertreter: Minderop, Ralph H., Dr. rer. nat.
(86) Internationale Anmeldenummer: EP0102205
(87) Internationale Veröffentlichungsnummer: WO01064584

(56) Entgegenhaltungen:
- EP-A- 0 147 167
- EP-A- 0 197 269
- DE-A- 4 107 287
- DE-C- 854 946
- GB-A- 736 272
- GB-A- 1 143 787
- US-A- 3 539 468
- US-A- 4 492 682

## Beschreibung

Die Erfindung betrifft ein Verfahren zur Herstellung eines Aluminiumhydroxidgels, das im Nebenstrom zu einem BAYER-Verfahren zur Gewinnung von Aluminiumoxid aus Bauxit durchführbar ist.

Aluminiumhydroxid wird als Beizmittel in der Textilindustrie, als Bestandteil von Antihidrotika, Zahnputzmitteln, Papieren, Keramik, Schleifmitteln, als Antacidum, als Füllstoff und Pigment in der Kunststoff- und Gummiindustrie sowie in Kosmetika, zum Flammfestmachen von Teppichen und Kunststoffen und als Adjuvanz in Impfstoffen verwendet. Seit kurzem werden Aluminiumhydroxidgele zur Herstellung von Polyaluminiumsulfat für die Verwendung als Abbindebeschleuniger in Beton eingesetzt. Hier ist es erwünscht, einen möglichst hohen Anteil an Aluminium in den Abbindebeschleuniger zu bringen.

Zu unterscheiden sind lösliches und unlösliches Aluminiumhydroxid. Unlösliches Aluminiumhydroxid liegt kristallin vor und wird beispielsweise aus der Bayerlauge durch Zusetzen von Impfkristallen und Agglomeration aus übersättigter Bayerlauge gewonnen. Ein typischer Vertreter der kristallinen Aluminiumhydroxide ist das Hydrargillit. Aluminiumhydroxidgel ist ein lösliches Aluminiumhydroxid und ist röntgenamorph.

Die US 4 492 682 betrifft die Herstellung eines hochreinen und homogenen, letztendlich kristallinen Böhmits und/oder Pseudoböhmits, wobei amorphes Aluminiumhydroxycarbonat mit Kohlendioxid bei einem pH-Wert unter 11 vermischt, das gewaschene Präzipitat auf eine Temperatur von weniger als 90°C und anschließend auf eine Temperatur von 90 bis 250°C erwärmt wird.

Die DE-PS 854 946 beschreibt die Herstellung eines reaktionsfähigen Aluminiumhydroxids oder eines reversibel kolloiden Aluminiumhydroxids und sieht es als wesentlich an, nach der Fällung von Aluminiumhydroxid den Niederschlag möglichst schnell der schädlichen Einwirkung von alkalisch reagierenden Alkaliverbindungen zu entziehen, da diese eine Alterung des Aluminiumhydroxids hervorrufen. Das kaustische Molverhältnis (Ma₂O_{frei}/Al₂O₃) während der Fällung beträgt 0,75. Das bekannte Verfahren sieht ferner nach dem Waschen des Aluminiumhydroxids eine Trocknung bei einer Temperatur von 110 °C vor.

Aus der GB 1 272 715 ist es bekannt, Aluminiumhydroxidgele dadurch herzustellen, dass eine Aluminiumchloridlösung oder Aluminiumsulfatlösung einer Lösung aus Natriumcarbonat und/oder Natriumbicarbonat unter Rühren bei einer Temperatur von etwa 30°C zugesetzt wird. Die Fällung erfolgt mithin aus einer sauren Lösung. Das Präzipitat wird filtriert und gewaschen bis es weitestgehend frei von löslichen Salzen ist. Je nach Ausgangsmaterial und Fällungsbedingungen sind die Qualität und die physikochemischen Eigenschaften des Aluminiumhydroxidgels verschieden. Nachteilig an dem beschriebenen Verfahren ist, dass es für die Aluminiumkomponente ein relativ teures Ausgangsmaterial verwendet, das im Allgemeinen aus Aluminiumhydroxid (Aluminiumoxid) hergestellt wird.

Die FR 2 255 080 schlägt deswegen ein Verfahren zur Gewinnung von getrocknetem Aluminiumhydroxidgel, ausgehend von der bei der Herstellung von Aluminiumoxid anfallenden Aiuminatlauge oder der bei der Behandlung von technischem Aluminiumoxidhydrat mit Soda erhaltenen Aluminatlauge, vor. In diesem Verfahren wird der Aluminat enthaltenden Lauge mit einem kaustischen Verhältnis von 1,6 bis 1,8 über einen Zeitraum von 20 bis 40 Minuten bei einer Temperatur von 20 bis 30°C und einem Druck von 1 bis 2,5 Atmosphären Kohlensäureanhydrid zugeführt, das bis 2,5 Atmosphären Kohlensäureanhydrid zugeführt, das erhaltene Präzipitat filtriert, bis zur Neutralität gewaschen, mit Wasser in Suspension gebracht und anschließend die Suspension mit einer Mineralsäure angesäuert. Schließlich wird erneut filtriert, gewaschen und getrocknet. Das Filtrat enthält weniger als 0,2 g/l gelöstes Al₂O₃. Mit diesem Verfahren werden qualitativ insbesondere im Hinblick auf die Säurebindungsfähigkeit hochwertige Aluminiumhydroxidgele erhalten, dennoch ist die Aufbereitung des Aluminiumhydroxidgels nach Trennung von der Fällungslauge mit dem zusätzlichen Säurebehandlungsprozeß, u. a. zur Veringerung des anhaftenden Na₂O, sehr aufwendig. Zudem ist ein zusätzlicher Kreislauf für die Rückgewinnung der Mineralsäure erforderlich, oder es entstehen Entsorgungsprobleme für die bei der Behandlung mit Mineralsäure entstehende Salzlösung. Für den Fall der Rückgewinnung der Mineralsäure verbleiben die aus der Neutralisation entstandene Salzlösung oder entstandenen Salzrückstände.

Der Erfindung liegt daher die Aufgabe zugrunde, das aus der FR 2 255 080 bekannte Verfahren wirtschaftlicher zu gestalten, wobei die Produktqualität zumindest erhalten bleiben und ein Aluminiumhydroxidgel mit hoher Langzeitstabilität geliefert werden soll. Insbesondere ist es erwünscht, ein Gel bereitzustellen, dessen Löslichkeit möglichst hoch ist und möglichst lange erhalten bleibt. Eine hohe Löslichkeit ist beispielsweise wichtig zur Herstellung von Aluminiumsulfatlösungen mit überstöchiometrischen Aluminiumgehalt, die in der Bauindustrie als Abbindebeschleuniger für Beton eingesetzt werden, zur Herstellung von Aluminiumchloridlösungen mit überstöchiometrischem Aluminiumgehalt (basische Aluminiumchloride), die für die Wasserreinigung, für die Papierindustrie für die Herstellung von Aluminiumoxidfasern und für Deodorantien verwendet werden, und zur direkten Herstellung von Aluminumformiat aus Aluminiumhydroxid und Ameisensäure, das in der Lederindustrie eingesetzt wird.

Gelöst wird diese Aufgabe durch ein Verfahren zur Herstellung von Aluminiumhydroxidgel, in dem man die bei der Al₂O₃-Herstellung nach dem BAYER-Verfahren erhaltene Aluminatlauge, erforderlichenfalls zur Einstellung eines geeigneten Molverhältnisses (MV Na₂O_{frei}/Al₂O₃) und einer geeigneten Al₂O₃-Konzentration mit Wasser verdünnt, bei einer Temperatur von unter 40 °C bei einem pH-Wert von etwa 12 bis 11 mit Kohlensäureanhydrid unter Fällung von Aluminiumhydroxidgel behandelt, das Präzipitat von der Fällungslauge trennt, das Präzipitat wäscht und trocknet. Das erfindungsgemäß erhaltene Aluminiumhydroxid ist röntgenamorph, hat eine hohe Löslichkeit über einen langen Zeitraum und eine hohe Säurebindungsfähigkeit.

Das erfindungsgemäße Verfahren unterscheidet sich von dem Verfahren der FR 2 255 080 dadurch, dass die Behandlung des gefällten Aluminiumhydroxids mit einer Mineralsäure und somit auch eine weitere Waschstufe entfällt. Diese Säurebehandlung beschreibt die FR 2 255 080 aber als wesentlichen Bestandteil des Verfahrens, weil dadurch die gewünschte Neutralität des Aluminiumhydroxidgels unter Erhalt der Säurebindungsfähigkeit erreicht wird.

Vorteilhaft am erfindungsgemäßen Verfahrens ist, dass es eng verzahnt mit dem BAYER-Verfahren zur Herstellung von Aluminiumoxid durchgeführt werden kann, wobei nicht nur als Ausgangsmaterial eine im BAYER-Verfahren anfallende Natriumaluminatlauge verwendet wird, sondern die bei der Aluminiumhydroxidgelherstellung anfallenden Nebenprodukte nach Kaustifizierung in das BAYER-Verfahren zurückgeführt werden können. Unter Kaustifizierung wird die Rückgewinnung des als Natriumcarbonat gebundenen Alkalis durch Umsetzung mit Calciumhydroxid verstanden.

Ausgangsmaterial im erfindungsgemäßen Verfahren ist ein Produktstrom aus dem BAYER-Verfahren, in dem aus Bauxit durch Behandlung mit Natriumlauge im Autoklaven Natriumaluminat bzw. Aluminiumhydroxid und nach dessen Calcinierung Aluminiumoxid gewonnen wird. Dieses Verfahren ist beschrieben in Ullmanns Enzyklopädie der Technischen Chemie, 3. Aufl., 3. Band, Seiten 375 bis 391, auf deren Offenbarung für die Zwecke der Beschreibung dieser Erfindung Bezug genommen wird. Ausgangsmaterial ist eine nach der Abtrennung des Rotschlamms erhaltene Aluminatlauge, die vorzugsweise auch noch einer Nachfiltration zur Befreiung der Lauge von letzten Rotschlamm-Schwebeteilchen unterzogen wird oder einer anderen Stelle des Laugenkreislaufs entnommen wird, beispielsweise nach der Abtrennung des auskristallisierten und agglomerierten Aluminiumhydroxids (Hydrargillit). Die Konzentration des in der Lauge gelösten Al₂O₃ kann beispielsweise 10 bis 90 g/l, vorzugsweise mehr als 30 g/l, betragen. Das kaustische Molverhältnis (Na₂O_{frei}/Al₂O₃) der Aluminat enthaltenden Lauge, aus der Aluminiumhydroxid gefällt werden soll, ist kleiner 1,6, vorzugsweise 1 bis kleiner 1,6.

Diese Lauge wird mit Kohlensäureanhydrid behandelt, wobei das Aluminiumhydroxid ausfällt. Das Verfahren wird vorzugsweise derart durchgeführt, dass die Fällung bei einem pH-Wert von etwa 12 beginnt und bei Erreichen von etwa pH 11 im Reaktionsmedium bereits mehr als 96 % des Aluminiums ausgefällt sind. Unter pH-Wert 11 wird hinsichtlich der weiteren Ausbeute das Einleiten von CO₂ unwirtschaftlich.

Es wurde festgestellt, dass durch nicht umgesetztes Kohlendioxid, insbesondere ab einem pH-Wert unter 11, die Bildung von Natriumhydrogencarbonat begünstigt wird. Dies ist nachteilig, weil dadurch Natrium im Produkt gebunden und die Langzeitstabilität des Alumniumhydroxidgels verschlechtert wird. Natrium läßt sich aber nur sehr schwierig auswaschen.

Als besonders günstig hat es sich erwiesen, dass das zum Aufschluss eingesetzte Bauxit einen Gehalt an organisch gebundenem Kohlenstoff (OC) von ≥ 0,05 Masse% aufweist. Es handelt sich hierbei um tropische Bauxite, deren OC bei den Reaktionsbedingungen im BAYER-Verfahren zu hochmolekularen und niedermolekularen Huminsäurebestandteilen und weiter zu aliphatischen Carbonsäureestern wie Acetat, Oxalat und weiter zu Carbonat abgebaut wird. Aus diesen Organika wird während des Bauxitaufschlusses Wasserstoff freigesetzt (reduzierende Bedingungen). Es treten somit zusätzlich Oxidations-Reduktions-Reaktionen unter den organischen Abbauprodukten auf. Die Abbauprodukte sind als gelöste Natriumsalze in der Lauge vorhanden.

Es wurde beobachtet, dass die amorphe Struktur des gefällten Aluminiumhydroxidgels besonders gut stabilisiert wird, wenn das Aluminiumhydroxidgel aus einer Lauge gefällt wird, die kurz zuvor mit Sauerstoff behandelt wurde.

Zur weiteren Stabilisierung der amorphen Struktur des gefällten Aluminiumhydroxidgels können Stabilisatoren wie Kohlenhydrate und Aldite der Fällungslauge zugesetzt werden. Geeignete Kohlenhydrate sind beispielsweise Saccharide. Geeignete Aldite sind beispielsweise Glycerin, Sorbitol und andere Zuckeralkohole. Diese Stabilisatoren werden je nach gewünschter Stabilitätsdauer verwendet und können in geringen Mengen eingesetzt werden. Es war jedoch überraschend, dass diese Mittel für das nach dem erfindungsgemäßen Verfahren erhaltene Gel nicht benötigt werden.

Das gefällte Aluminiumhydroxidgel wird anschließend von der Fällungslauge getrennt. Die Trennung kann durch Filtrieren, Dekantieren oder Zentrifugieren erfolgen. Das abgetrennte Aluminiumhydroxidgel wird mit Wasser gewaschen. Dann wird das Gel getrocknet, wobei Temperatur und Verweilzeit so eingestellt werden, dass keine vorzeitige Kristallisation des Aluminiumhydroxidgels eintritt, wodurch das Löslichkeitsverhalten des Gels beeinträchtigt wird. Das Gel selbst sollte nicht über 40°C, vorzugsweise nur bis etwa 30 °C, erwärmt werden.

Bei der Fällung des Aluminiumhydroxidgels durch Behandeln der Aluminat enthaltenden Lauge mit Kohlensäureanhydrid bildet sich unter anderem gelöstes Natriumcarbonat. Nach Abtrennung des Aluminiumhydroxidgels erfolgt eine so genannte Kaustifizierung, bei der der vom Gel befreiten Lauge gebrannter Kalk (CaO) zugesetzt wird. Zur Kaustifizierung kann die bereits für eine BAYER-Anlage erforderliche Kaustifizierungsstufe verwendet werden. Durch die Kaustifizierung wird aus der Natriumcarbonatlösung Natriumhydroxidlösung (Natronlauge) zurückgewonnen. Die Lauge wird in den BAYER-Kreislauf rückgeführt. Das bei der Kaustifizierung erhaltene Calciumcarbonat kann gebrannt und erneut zur Kaustifizierung oder in der Baustoffindustrie verwendet werden. Im erfindungsgemäßen Verfahren fallen somit keine Abfallstoffe an; vielmehr wird ein geschlossener Kreislauf bereitgestellt.

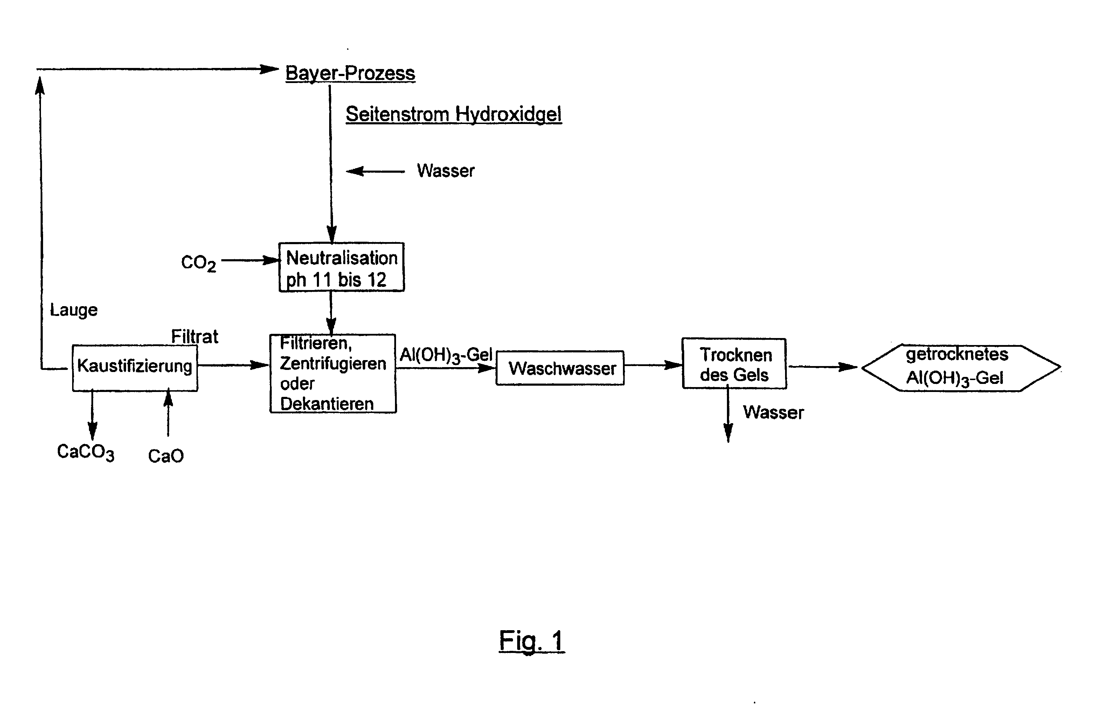

In der Figur 1 ist eine beispielhafte Ausführungsform des erfindungsgemäßen Verfahrens gezeigt, aus der auch die Verknüpfung mit dem BAYER-Verfahren hervorgeht.

Das Verfahren kann in üblichen Fällungsreaktoren durchgeführt werden. Kohlendioxid kann beispielsweise über eine perforierte Scheibe im Boden des Reaktors oder über ein ringförmig im unteren Teil des Reaktors am Rand angeordnetes perforiertes Rohr eingeleitet werden. Der Fällungsreaktor kann kesselförmig oder ein Rohrreaktor sein. Als vorteilhaft hat sich erwiesen, den Reaktor mit einem Flügelrührer auszurüsten, um so Kohlendioxid weitestgehend im unteren Teil des Reaktors zur Reaktion zu bringen. Der Reaktor muß gekühlt werden, um die Temperatur im Reaktionsgemisch unter 40 °C, vorzugsweise unter 30 °C, zu halten.

Gemäß einer weiteren bevorzugten Ausführungsform der Erfindung erfolgen die Neutralisation der BAYER-Lauge und die Fällung von Aluminiumhydroxidgel in einem sogenannten Schlaufenreaktor. Ein solcher Reaktor ist bekannt. Dabei wird CO₂ dem unteren Teil des Reaktors zugeführt und durch einen Flügelrührer ein Aufsteigen und Zusammenfließen zu Kohlendioxidblasen vermieden. Das Gemisch aus Kohlendioxid und Aluminatlauge wird in die gekühlte Schlaufe gesaugt, wo die Fällung des Aluminiumhydroxidgels erfolgt. Das erhaltene Gel wird in den oberen Teil des Reaktorgefäßes befördert und dort von der Mutterlauge getrennt.

Gemäß einer weiteren bevorzugten Ausführungsform der Erfindung wird das Verfahren kontinuierlich durchgeführt. Die kontinuierliche Verfahrensweise kann in der Weise erfolgen, dass das aufschwimmende Aluminiumhydroxidgel (Produkt) ständig dem Reaktor oben entnommen wird oder es kann zweistufig erfolgen . Dabei kann die Aluminatlauge zunächst durch Zugabe von Kohlendioxid auf einen pH-Wert von etwa 12 gebracht und anschließend in einen Fällungsreaktor befördert werden. Bis zu einem pH-Wert von etwa 12 erfolgt noch keine Fällung des Aluminiumhydroxidgels. In diesem Bereich fällt aber die größte Neutralisationswärme an. Im Fällungsreaktor wird weiter CO₂ zugesetzt bis das Reaktionsgemisch einen pH-Wert von etwa 11 aufweist. Die Fällung des Aluminiumhydroxidgels erfolgt im Fällungsreaktor bei Durchlaufen des pH-Bereichs von 12 bis 11. Diese Verfahrensweise hat den Vorteil, dass dort, wo die Hauptneutralisationswärme anfällt, noch kein Produkt entstanden ist, das durch die Neutralisationswärme in seiner Qualität beeinträchtigt wird.

Vorzugsweise erfolgt die Trennung des Aluminiumhydroxidgels von der Mutterlauge durch Druckfiltration. Je nach Auslegung des Filters kann die Filtration bei unterschiedlichen Drücken, beispielsweise bei einem Druck von 3 bis 4 bar, erfolgen. Der Restwassergehalt beträgt dann weniger als 40 Gew.%, bezogen auf die Masse des Produkts. Ein Produkt mit diesem Wassergehalt ist zum Einsatz in einem Abbindebeschleuniger bestens geeignet.

Die Trocknung des Aluminiumhydroxidgels kann durch Umluft oder mittels Sprühtrocknung erfolgen.

Die Erfindung wird durch die folgenden Beispiele weiter erläutert.

### Beispiel 1

Es wurden 6 Versuche in Ansätzen von 8 1 gefahren. Der Reaktor aus Glas wurde mit einem Wasserbad gekühlt. In den Reaktor wurde eine Bayerlauge vorgegeben. Die Lauge enthielt 131,27 g/l Na₂O_{frei} (2,12 Mol) und 151,62 g/l Al₂O₃ (1,49 Mol). Das Molverhältnis Na₂O_{frei}/Al₂O₃ betrug 1,42. Die Lauge hatte eine Temperatur von etwa 53 °C und war mit Wasser (21 °C) verdünnt worden. Die Temperatur des Gemischs betrug etwa 27 °C.

Es wurde über einen Zeitraum von 45 bis 60 Minuten CO₂ bis zum Erreichen von End-pH-Werten von 11,4, 11,3, 11,2, und 11,0 zugeführt und das Reaktionsgemisch mit einem Flügelrührer gerührt. Die Fällung erfolgte bei Temperaturen von 24 bis 28°C. Unmittelbar nach Erreichen des End-pH-Werts wurde mit einer Labornutsche und Wasserstrahlyakuum die Mutterlauge von dem gefällten Aluminiumhydroxidgel getrennt. Der Filtersatz wurde zweimal mit 3 Liter Wasser gewaschen. Die Naßausbeuten betrugen zwischen 1.500 und 1.750 g. Das nasse Produkt mit einem Wassergehalt von etwa 80% wurde bei 30°C mit Umluft getrocknet und anschließend auf eine Teilchengröße von kleiner 80 um zerkleinert. Der Wassergehalt des trockenen, fließfähigen Produkts betrug jeweils etwa 20%.

Alle erhaltenen Produkten zeigten eine sehr gute Reaktivität, waren amorph und wiesen einen Na₂O-Anteil von weniger als 5 Gew.%, bezogen auf das Gewicht des Produkts auf. Das Produkt wies die vom Europäischen Arzneibuch geforderte Säurebindungsfähigkeit auf. Es lösten sich mindestens 5g Aluminiumhydroxidgel in 100ml 10%iger Ameisensäure bei einer Temperatur von 45 bis 50 °C.

### Beispiel 2

Es wurden vergleichbare Ansätze einer Aluminatlauge wie in Beispiel 1 unter Einsatz eines Schlaufenreaktors mit Kohlendioxid unter vergleichbaren Bedingungen umgesetzt. Kohlendioxid wurde am Reaktorboden eingeleitet und das frische Reaktionsmedium vom Reaktorboden mit einer Pumpe in die Schlaufe eingesaugt und dem Reaktor von oben wieder zugeführt. Die Schlaufe wurde mit Wasser gekühlt. Die Produkte zeigten die gleichen Qualitäten wie diejenigen von Beispiel 1.

## Patentansprüche

1. Verfahren zur Herstellung eines röntgenamorphen Aluminiumhydroxidgels, in dem die bei der Al₂O₃-Herstellung nach dem BAYER-Verfahren erhaltene Aluminatlauge mit Kohlensäureanhydrid unter Fällung des Aluminiumhydroxidgels behandelt wird, worin man das kaustische Molverhältnis (Na₂O_{frei}/Al₂O₃) der Aluminat enthaltenden Lauge auf kleiner 1,6 einstellt, die Fällung bei einer Temperatur von unter 40°C und bei einem pH-Wert von 11 bis etwa 12 durchführt, Präzipitat und Lauge voneinander trennt, das Präzipitat wäscht und unter Erhalt der amorphen Struktur trocknet.

2. Verfahren nach Anspruch 1, worin man vor dem Einleiten von Kohlensäureanhydrid in der Aluminatlauge einen Aluminiumoxidgehalt von mindestens 30 g/l einstellt.

3. Verfahren nach Anspruch 1 oder 2, worin man die Aluminatlauge vor dem Einleiten von Kohlendioxid mit Sauerstoff behandelt.

4. Verfahren nach einem der Ansprüche 1 bis 3, worin man das Verfahren kontinuierlich durchführt.

5. Verfahren nach Anspruch 4, worin man das Verfahren zweistufig durchführt und die Aluminatlauge zunächst durch Zugabe von Kohlendioxid auf einen pH-Wert von etwa 12 bringt, das erhaltene Reaktionsgemisch in einen Fällungsreaktor fördert und anschließend Kohlendioxid einleitet und Aluminiumhydroxidgel fällt.

6. Verfahren nach einem der Ansprüche 1 bis 5, worin man das Präzipitat von der Lauge durch eine Filtration unter Druck trennt.

7. Verfahren nach Anspruch 6, worin man das erhaltene, auf einem Wassergehalt von weniger als 40 % getrocknete Produkt pulverisiert.

8. Verfahren nach einem der Ansprüche 1 bis 7, worin man das Gel auf einen Wassergehalt von etwa 20 % trocknet.

9. Verfahren nach einem der Ansprüche 1 bis 8, .worin man die nach der Abtrennung des Aluminiumhydroxidgels erhaltene Lauge kaustifiziert und die Kaustifizierungsprodukte in das BAYER-Verfahren zurückführt.

## Claims

1. A method for producing an aluminium hydroxide gel, in which the aluminate lye obtained from Al₂O₃ production according to the BAYER method is treated with carboxylic acid anhydride with precipitation of the aluminium hydroxide gel, wherein the caustic mol ratio (Na₂O_{free}/Al₂O₃) of the lye containing the aluminate is adjusted to less than 1.6, precipitation is carried out at a temperature of under approximately 40 °C and at a pH value of 11 to 12, precipitate and lye are separated from one another, and the precipitate is washed and dried while preserving the amorphous structure.

2. The method as claimed in Claim 1, wherein an aluminium oxide content of at least 30 g/l is adjusted before the carboxylic acid anhydride is introduced in the aluminate lye.

3. The method as claimed in any one of Claim 1 or 2, wherein the aluminate lye is treated before carbon dioxide is introduced with oxygen.

4. The method as claimed in any one of Claims 1 to 3, wherein the method is carried out continuously.

5. The method as claimed in Claim 4, wherein the method is performed in two stages and the aluminate lye is first brought to a pH value of approximately 12 by addition of carbon dioxide, the resulting reaction mixture is forwarded to a precipitation reactor and carbon dioxide is then introduced and aluminium hydroxide gel is precipitated.

6. The method as claimed in any one of Claims 1 to 5, wherein the precipitate is separated from the lye via filtration under pressure.

7. The method as claimed in Claim 6, wherein the resulting product, dried to a water content of less than 40 %, is pulverised.

8. The method as claimed in any one of Claims 1 to 7, wherein the gel is dried to a water content of approximately 20 %.

9. The method as claimed in any one of Claims 1 to 8, wherein the lye obtained after separation of the aluminium hydroxide gel is causticized and the causticized products are returned to the BAYER method.

## Revendications

1. Procédé de préparation d'un gel d'hydroxyde d'aluminium amorphe aux rayons X, dans lequel la lessive d'aluminate obtenue lors de la préparation de Al₂O₃ selon le procédé BAYER est traitée avec de l'anhydride carbonique avec précipitation du gel d'hydroxyde d'aluminium, où on ajuste le rapport molaire caustique (Na₂O_{libre}/Al₂O₃) de la lessive contenant l'aluminate à moins de 1,6, on réalise la précipitation à une température inférieure à 40°C et à un pH allant de 11 à environ 12, on sépare le précipité de la lessive, on lave le précipité et on sèche pour obtenir la structure amorphe.

2. Procédé suivant la revendication 1, où on ajuste une teneur en oxyde d'aluminium d'au moins 30 g/litre avant le passage de l'anhydride carbonique dans la lessive d'aluminate.

3. Procédé suivant la revendication 1 ou 2, où on traite la lessive d'aluminate avec de l'oxygène avant le passage de l'anhydride carbonique.

4. Procédé suivant l'une quelconque des revendications 1 à 3, où le procédé est réalisé en continu.

5. Procédé suivant la revendication 4, où on réalise le procédé en deux étapes et on porte la lessive d'aluminate, d'abord à un pH d'environ 12 par addition de dioxyde de carbone, le mélange de réaction obtenu est introduit dans un réacteur de précipitation et ensuite, on fait passer le dioxyde de carbone et le gel d'hydroxyde d'aluminium précipite.

6. Procédé suivant l'une quelconque des revendications 1 à 5, où on sépare le précipité de la lessive par une filtration sous pression.

7. Procédé suivant la revendication 6, où on pulvérise le produit obtenu, séché à une teneur en eau de moins de 40%.

8. Procédé suivant l'une quelconque des revendications 1 à 7, où on sèche le gel jusqu'à une teneur en eau d'environ 20%.

9. Procédé suivant l'une quelconque des revendications 1 à 8, où on alcalinise la lessive obtenue après la séparation du gel d'hydroxyde d'aluminium et le produit alcalinisé est ramené dans le procédé BAYER.
